(19) Europäisches Patentamt
European Patent Office
Office européen des brevets

(11) **EP 1 907 683 B1**

(12) **EUROPÄISCHE PATENTSCHRIFT**

(45) Veröffentlichungstag und Bekanntmachung des Hinweises auf die Patenterteilung:
**15.08.2012 Patentblatt 2012/33**

(21) Anmeldenummer: **06763967.4**

(22) Anmeldetag: **29.06.2006**

(51) Int Cl.:
*F02D 41/40* *(2006.01)*

(86) Internationale Anmeldenummer:
**PCT/EP2006/063704**

(87) Internationale Veröffentlichungsnummer:
**WO 2007/006660 (18.01.2007 Gazette 2007/03)**

(54) **ZUR DOSIERUNG VON KRAFTSTOFF ZU BRENNRÄUMEN EINES VERBRENNUNGSMOTORS DIENENDES VERFAHREN UND STEUERGERÄT**

METHOD AND CONTROL DEVICE FOR METERING FUEL FOR COMBUSTION CHAMBERS IN AN INTERNAL COMBUSTION ENGINE

PROCEDE ET APPAREIL DE COMMANDE POUR DOSER DU CARBURANT VERS UNE CHAMBRE DE COMBUSTION DE MOTEUR A COMBUSTION INTERNE

(84) Benannte Vertragsstaaten:
**DE FR GB IT**

(30) Priorität: **14.07.2005 DE 102005032840**
**26.04.2006 DE 102006019317**

(43) Veröffentlichungstag der Anmeldung:
**09.04.2008 Patentblatt 2008/15**

(73) Patentinhaber: **ROBERT BOSCH GMBH**
**70442 Stuttgart (DE)**

(72) Erfinder:
• **MATTES, Patrick**
**70569 Stuttgart (DE)**
• **DAMSON, Mark**
**70499 Stuttgart (DE)**
• **SCHUELER, Matthias**
**71711 Steinheim (DE)**
• **MADER, Christian**
**70839 Gerlingen (DE)**
• **KESSLER, Michael**
**71287 Weissach (DE)**
• **DAUTEL, Vincent**
**70176 Stuttgart (DE)**

(56) Entgegenhaltungen:
EP-A- 0 921 296    FR-A- 2 864 840
US-B1- 6 196 184

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 907 683 B1

**Beschreibung**

Stand der Technik

Die Erfindung betrifft ein Verfahren zur Dosierung von Kraftstoff in einen Brennraum eines Verbrennungsmotors, bei dem eine für eine Verbrennung zu dosierende Kraftstoffmenge durch eine Voreinspritzung und wenigstens eine weitere Einspritzung dosiert wird und bei dem im Betrieb des Verbrennungsmotors Mengenfehler der Voreinspritzung aus dem Signal wenigstens eines Sensors ermittelt werden. Die Voreinspritzung und die weiteren Einspritzungen, insbesondere die Haupteinspritzung, werden auch als Teileinspritzungen bezeichnet.

Ferner betrifft die Erfindung ein Steuergerät eines wenigstens einen Injektor aufweisenden Einspritzsystems eines Verbrennungsmotors, das eine Kraftstoffmenge für einen Verbrennungsvorgang durch eine Voreinspritzung und wenigstens eine weitere Einspritzung in einen Brennraum des Verbrennungsmotors dosiert, wobei das Steuergerät im Betrieb des Verbrennungsmotors Mengenfehler der Voreinspritzung aus dem Signal wenigstens eines Sensors ermittelt.

Aus der EP 0 921 296 A1 ist ein Verfahren zum Zumessen von Kraftstoff in einen Brennraum eines Verbrennungsmotors bekannt. Dabei wird die einzuspritzende Kraftstoffmenge auf eine Vor- und eine Haupteinspritzung aufgeteilt. Die Voreinspritzmenge wird ausgehend von der Differenz zwischen einem gewünschten und einem tatsächlichen Geräuschsignal korrigiert. Die Einspritzmenge, die bei der Haupteinspritzung zugemessen wird, ergibt sich durch Differenzbildung zwischen der Gesamtmenge und der korrigierten Voreinspritzmenge.

Ein solches Verfahren und ein solches Steuergerät ist jeweils aus der DE 103 05 656 A1 bekannt. Dabei werden aus dem Signal des Körperschallsensors Kenngrößen ermittelt, wobei zunächst das Körperschallsignal in wenigstens zwei Kurbelwellen-Winkelbereichen gefiltert wird. Vorzugsweise wird für jeden Winkelbereich eine Kenngröße ermittelt, welche die Intensität der Schallemission in diesem Winkelbereich charakterisiert. Die ermittelten Kenngrößen charakterisieren bestimmte Ereignisse und Zeitpunkte im Arbeitszyklus des Verbrennungsmotors. Insbesondere bei einer Voreinspritzung liegt zwischen der Intensität der damit verbundenen Schallemission und der eingespritzten Kraftstoffmenge ein einfacher Zusammenhang vor, so dass die bei einer Voreinspritzung eingespritzte Kraftstoffmenge nach dem in der DE 103 05 656 A1 breit dargestellten Verfahren aus dem Körperschallsignal ermittelt werden kann.

Bei einer über Injektoren (Einspritzventile) erfolgenden Dosierung von Kraftstoff in die Brennräume eines Verbrennungsmotors werden die Injektoren mit Einspritzimpulsbreiten angesteuert, die einen Durchflussquerschnitt der Injektoren für die Dauer der Einspritzimpulsbreite öffnen.

Obwohl die Einspritzimpulsbreite sehr genau vorgegeben werden kann, ist die dabei jeweils eingespritzte Kraftstoffmenge unter anderem vom Einspritzdruck und von Eigenschaften des Injektors selbst abhängig, beispielsweise von einer Anzugsverzögerung, mit welcher der Injektor auf einen Einspritzimpuls reagiert. Diese Eigenschaften können von Injektor zu Injektor streuen, so dass auch die jeweils eingespritzten Kraftstoffmengen unerwünschten Streuungen unterworfen sind. Als Folge werden zum Beispiel die Abgasemissionen des Verbrennungsmotors und/oder das Laufverhalten des Verbrennungsmotors negativ beeinflusst. Dies gilt insbesondere für die sogenannte

Haupteinspritzung, weil bei dieser der größte Teil der für einen Verbrennungsvorgang einzuspritzenden Kraftstoffmenge dosiert wird. Es besteht daher ein Interesse, die genannten Streuungen, die sich in Abweichungen einer tatsächlich eingespritzten Kraftstoffmenge von einem Sollwert für die einzuspritzende Kraftstoffmenge abbilden, zu kompensieren. Diese Abweichungen werden im Folgenden auch als Mengenfehler bezeichnet.

Es besteht daher ein Bedürfnis nach einer Kompensation oder Korrektur des Mengenfehlers sowohl der Voreinspritzungen als auch der Haupteinspritzungen. Wie bereits erwähnt, hat sich bei Versuchen ein vergleichsweise einfacher Zusammenhang zwischen der relativ kleinen Voreinspritzmenge und dem Körperschallsignal ergeben. Mit anderen Worten: Die relativ kleinen Voreinspritzmengen und damit auch ihre Mengenfehler lassen sich recht gut aus dem Körperschallsignal detektieren. Es hat sich aber auch gezeigt, dass dies nicht für die Haupteinspritzmengen gilt, die größenordnungsmäßig um einen Faktor 10 größer sind als die Voreinspritzmengen. Die Mengenfehler der Haupteinspritzungen lassen sich also nicht direkt mit hinreichender Genauigkeit aus dem Körperschallsignal detektieren. Dies gilt analog für alle weiteren Einspritzungen, über die im Vergleich zur Voreinspritzung große Kraftstoffmengen dosiert werden. Das Körperschallsignal ist hierzu besonders geeignet, es können aber auch Ausgangssignale anderer Sensoren, die eine erfolgte Verbrennung anzeigen verwendet werden.

Vor diesem Hintergrund sieht die Erfindung bei einem Verfahren der eingangs genannten Art vor, dass ein Korrekturwert als Funktion des Mengenfehlers der Voreinspritzung gebildet wird, und wenigstens eine der weiteren Einspritzungen mit dem Korrekturwert korrigiert wird. Entsprechend wird für ein Steuergerät der eingangs genannten Art vorgeschlagen, dass das Steuergerät einen Korrekturwert als Funktion des Mengenfehlers der Voreinspritzung bildet, und wenigstens eine der weiteren Einspritzungen mit dem Korrekturwert korrigiert.

Vorteile der Erfindung

Diese Erfindung basiert auf der Erkenntnis, dass es eine Korrelation der Mengenfehler bei Voreinspritzungen und den weiteren Teileinspritzungen, z.B.

den Haupteinspritzungen, gibt. Durch diese Korrelation lässt sich der Mengenfehler der weiteren Einspritzungen gewissermaßen indirekt aus Mengenfehlern der Voreinspritzungen bestimmen, die direkt aus dem Sensorsignal bestimmt worden sind.

Die Erfindung ermöglicht damit eine indirekte Bestimmung des Mengenfehlers der weiteren Teileinspritzungen aus dem für kleine Einspritzmengen bestimmten Mengenfehler. Typische Werte von Voreinspritzmengen liegen bei einem als Beispiel betrachteten Verbrennungsmotor im Bereich zwischen 0,6 und 2 mm$^3$, während die weiteren Einspritzmengen, insbesondere die Haupteinspritzmenge, dort typischerweise auch Werte von 6 bis 80mm$^3$ annehmen kann. Diese Erkenntnis ist nicht selbstverständlich und es ist insbesondere nicht so, dass der Mengenfehler bei Voreinspritzungen und Haupteinspritzung gleich ist oder dass der Mengenfehler in direkt vorhersehbarer Weise proportional zur eingespritzten Kraftstoffmenge ist. Die Korrelation fällt vielmehr für jeden individuellen Injektor individuell aus. Dabei haben sich jedoch statistische Zusammenhänge gezeigt, die im Rahmen der vorliegenden Erfindung genutzt werden. Die Erfindung ermöglich daher auch eine Korrektur von Mengenfehlern bei den größeren und weiteren Einspritzmengen, ohne dass dafür eine weitere Sensorik, beispielsweise eine zylinderindividuell auflösende Abgassensorik oder eine zylinderindividuelle Zylinderdrucksensorik erforderlich wäre.

Bei einer besonders einfachen Realisierung ist vorgesehen, dass die Korrektur für weitere Teileinspritzungen, wie die Haupteinspritzung übernommen wird. Dabei ist die Korrektur nur bei kleinen Einspritzmengen wirksam. Dies kann beispielsweise dadurch realisiert werden, dass die Korrektur nur bis zu einem Schwellenwert der Einspritzmenge wirksam ist. Alternativ kann vorgesehen sein, dass für jede Einspritzmenge ein prozentualer Wert angegeben abgelegt ist, die den Grad der Wirksamkeit der Korrektur angibt. So nimmt dieser Wert bei kleinen Mengen den Wert 100% an und nimmt zu größeren Mengen hin auf 0% ab. Ab einem bestimmten Wert ist der Wert 0% und die Korrektur damit wirkungslos. Diese Realisierung beruht auf der Erkenntnis, dass bei kleinen Einspritzmengen die Korrelation zwischen der Korrektur für die Voreinspritzmenge und der Haupteinspritzmenge sehr gut ist.

Diese Vorgehensweise ist besonders vorteilhaft, da sie auf alle Injektoren anwendbar ist. Es müssen keine Korrelationswerte für unterschiedliche Injektoren oder Injektortypen ermittelt werden. Es ist keine Überwachung in der Serie nötig, die überprüft, ob die Korrelation sich verändert.

Mit Blick auf Ausgestaltungen des Verfahrens ist bevorzugt, dass für jede Einspritzung ein Basiswert einer einzuspritzenden Kraftstoffmenge und ein Basiswert einer entsprechenden Einspritzimpulsbreite gebildet wird, die Funktion eine Abhängigkeit von einem Produkt des Mengenfehlers der Voreinspritzmenge und eines Faktors aufweist und wenigstens einer der Basiswerte mit dem Korrekturwert verknüpft wird.

Diese Ausgestaltung nutzt aus, dass sich bei einer statistischen Betrachtung gezeigt hat, dass die Mengenfehler von Voreinspritzmenge und der Einspritzmenge weiterer Einspritzungen mit einer vergleichsweise guten Annäherung durch den genannten, durch die statistische Betrachtung zu ermittelnden Faktor aufeinander abgebildet werden können.

Bei Mengenfehlern der Voreinspritzmenge, die vom Steuergerät bereits in entsprechende Äquivalente der Voreinspritz-Einspritzimpulsbreite umgerechnet worden sind, ist es mit Blick auf die Rechenkapazität des Steuergeräts ökonomisch, auch einen Basiswert einer entsprechenden Einspritzimpulsbreite für die weitere Einspritzung, insbesondere für die Haupteinspritzung, mit einem Korrekturwert zu verknüpfen. Die Verknüpfung kann jedoch mit einem entsprechend gebildeten Korrekturwert auch mit einem im Basiswert für die weitere Einspritzmenge vorgenommen werden, was die breite Verwendbarkeit der Erfindung belegt.

Bevorzugt ist auch, dass die Verknüpfung additiv ist, weil diese Art der Verknüpfung besonders einfach durchzuführen ist, und der Korrekturwert dann ein direktes Maß für einen Mengenfehler der weiteren Einspritzung ist, der dann auch im Rahmen weiterer Funktionen, beispielsweise im Rahmen von Diagnosefunktionen, direkt mit Schwellenwerten verglichen werden kann.

Ferner ist bevorzugt, dass der Korrekturwert zusätzlich abhängig von einem Druck in einem Kraftstoff-Druckspeicher des Verbrennungsmotors gebildet wird.

Diese Ausgestaltung berücksichtigt, dass sich bei einer statistischen Auswertung der Korrelation von Mengenfehlern zwischen Voreinspritzungen und weiteren Einspritzungen eine Druckabhängigkeit gezeigt hat. Die Berücksichtigung der Druckabhängigkeit bei der Korrekturwertbildung verbessert insofern die Genauigkeit der indirekt aus dem Körperschallsignal bei Voreinspritzungen ermittelten Korrekturwertes für den Mengenfehler weiterer Einspritzungen.

Bevorzugt ist auch, dass die Funktion ein Polynom ersten Grades mit einer von dem Faktor abhängigen Steigung und einem von dem Druck abhängigen additiven Versatz (Offset) ist.

Es hat sich gezeigt, dass die Ausgestaltung der Funktion als Polynom ersten Grades mit den genannten Eigenschaften die auftretenden Streuungen vergleichsweise gut abbildet, wobei als besonderer Vorteil zu sehen ist, dass der Einfluss des Drucks im Kraftstoff-Druckspeicher separat durch einen additiven Versatz abbildbar ist.

Eine weitere bevorzugte Ausgestaltung zeichnet sich dadurch aus, dass die Funktion ein Polynom höheren als des ersten Grades ist. Es versteht sich, dass Schwankungen u.U. mit Polynomen höherer Ordnung genauer abgebildet werden können, wobei allerdings auch der Aufwand bei der Festlegung der Polynom-Koeffizienten und der Aufwand bei den zur Korrektur notwendigen Berechnungen im Fahrzeug steigt.

Ferner ist bevorzugt, dass die Funktion durch ein Korrelationsmodell definiert wird, das den in Betrieb ermittelten Mengenfehlern der Voreinspritzimpulsbreiten individuell berechnete Mengenfehler der weiteren Einspritzimpulsbreiten zuordnet. Es ist gerade diese Korrelation, die eine indirekte Bestimmung von Mengenfehlern der weiteren Einspritzungen aus den Mengenfehlern der Voreinspritzimpulsbreiten erlaubt, die aus dem Körperschallsignal direkt bestimmt werden.

Bevorzugt ist auch, dass die Koeffizienten des Polynoms offline durch statistische Bewertung von bei einer Stichprobe von Injektoren eines Typs ermittelten Korrelationen zwischen Mengenfehlern bei Voreinspritzimpulsbreiten und Mengenfehlern bei weiteren Einspritzimpulsbreiten ermittelt werden. Der Begriff offline bedeutet hier also eine Bewertung außerhalb eines bestimmten Verbrennungsmotors, in dem die Injektoren oder Injektoren des gleichen Typs und/oder Baureihe und/oder Produktionscharge später verwendet werden.

Durch diese Ausgestaltung muss die Korrelation von Mengenfehlern bei Voreinspritzungen und weiteren Einspritzungen nicht für jeden gefertigten Injektor individuell erfolgen, was die in großen Stückzahlen erfolgende Fertigung der Injektoren vereinfacht. Bevorzugt ist auch, dass der Korrekturwert zusätzlich in Abhängigkeit von einer Betriebszeit von Injektoren des Verbrennungsmotors gebildet wird.

Dieser Ausgestaltung ermöglicht zusätzlich eine Kompensation einer Mengendrift die z.B. durch Verkokungen des Injektors über seiner Lebensdauer im Verbrennungsmotor auftreten. Dabei wird unter einer Mengendrift eine Veränderung des Mengenfehlers über der Betriebszeit verstanden.

Mit Blick auf Ausgestaltungen des Steuergeräts ist bevorzugt, dass es wenigstens eine der oben genannten Ausgestaltungen des Verfahrens steuert.

Weitere Vorteile ergeben sich aus der Beschreibung und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Zeichnungen

Ausführungsbeispiele der Erfindung sind in den Zeichnungen dargestellt und werden in der nachfolgenden Beschreibung näher erläutert.

Es zeigen, jeweils in schematischer Form:

Figur 1     das technische Umfeld der Erfindung;

Figur 2     qualitativ eine Voreinspritzung und eine Haupteinspritzung in einem Verdichtungstakt eines Verbrennungsmotors;

Figur 3     ein Flussdiagramm als Ausführungsbeispiel eines erfindungsgemäßen Verfahrens;

Figur 4     eine statistische Verteilung von Mengenfehlern weiterer Einspritzungen bei einer Auftragung über Mengenfehlern von Voreinspritzungen; und

Figur 5     ein durch Basiswerte von Haupteinspritzungen und durch Einspritzdrücke aufgespanntes Korrekturfaktor-Kennfeld.

Beschreibung der Ausführungsbeispiele

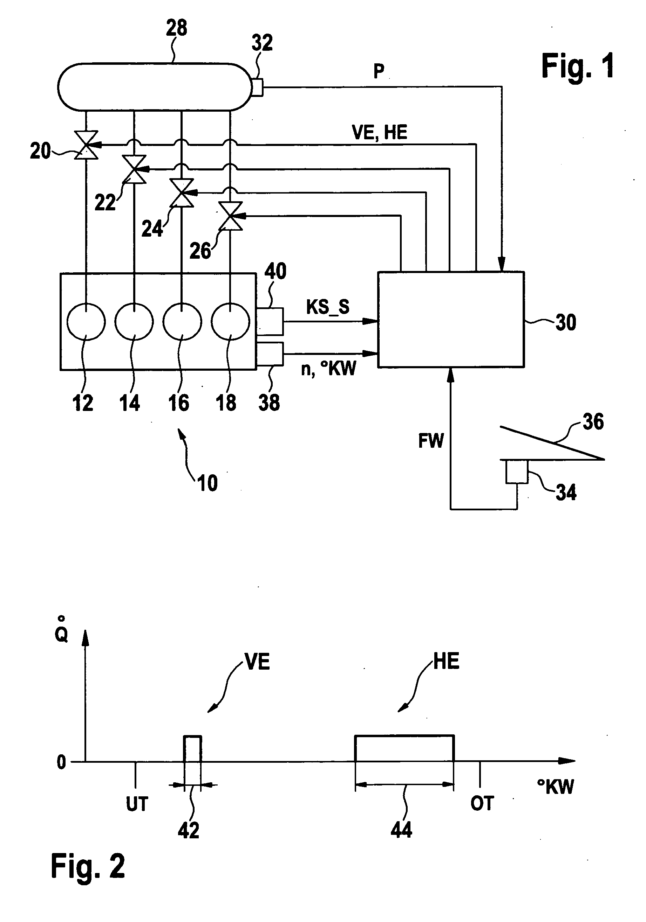

Im Einzelnen zeigt Figur 1 einen Verbrennungsmotor 10 mit Brennräumen 12, 14, 16, 18 in die über zugeordnete Einspritzventile 20, 22, 24, 26 Kraftstoff aus einem Kraftstoff-Druckspeicher 28 durch Einspritzungen dosiert wird. Dazu werden die Einspritzventile oder Injektoren 20, 22, 24, 26 durch ein Steuergerät 30 mit individuellen Einspritzimpulsbreiten öffnend angesteuert. Dabei wird jeweils für einen Verbrennungsvorgang in einem Brennraum 12, 14, 16, 18 eine vergleichsweise kleine Kraftstoffmenge durch eine Voreinspritzung VE dosiert, während eine vergleichsweise große Kraftstoffmenge später durch eine Haupteinspritzung HE dosiert wird. Eine bei einer bestimmten Einspritzimpulsbreite über ein Einspritzventil 20, 22, 24, 26 dosierte Kraftstoffmenge hängt vom Kraftstoffdruck im Kraftstoff-Druckspeicher 28 ab. Um diesen Einfluss zu berücksichtigen misst ein Drucksensor 32 diesen Kraftstoffdruck p und übergibt ein entsprechendes elektrisches Signal an das Steuergerät 30. Die Gesamtmenge an Kraftstoff, die jeweils für einen Verbrennungsvorgang zu dosieren ist, hängt wesentlich von einer Drehmomentanforderung ab, die der Verbrennungsmotor 10 erfüllen soll. Eine solche Drehmomentanforderung wird beim Gegenstand der Figur 1 durch einen Fahrerwunschgeber 34 erfasst, der zum Beispiel mit einem Fahrpedal 36 eines Kraftfahrzeugs verbunden ist und ein einem Fahrerwunsch FW entsprechendes elektrisches Signal an das Steuergerät 30 übergibt. Zur Berechnung von Einspritzmengen und insbesondere zur Steuerung des Timings einzelner Einspritzungen weist der Verbrennungsmotor 10 ferner einen Winkelsensor 38, der dem Steuergerät 30 Informationen über eine Drehzahl n einer Kurbelwelle des Verbrennungsmotors 10 sowie über eine Winkellage °KW der Kurbelwelle signalisiert. Ein Körperschallsensor 40 ist am Verbrennungsmotor 10 angebracht, und übergibt dem Steuergerät 30 ein Körperschallsignal KS_S, aus dem das Steuergerät 30 insbesondere die bei einer Voreinspritzung VE dosierte Kraftstoffmenge und den dabei auftretenden Mengenfehler bestimmt. Die Bestimmung der Voreinspritzmenge erfolgt z.B. nach dem aus der DE 103 05 656 A1 bereits bekannten Verfahren. Alternativ können auch andere Verfahren, die auf dem Signal des Körperschallsignals beruhen, oder andere Verfahren, die auf anderen Signalen beruhen, zur Bestimmung des Mengenfehlers verwendet werden. Insbesondere sind alle Signale verwendbar, bei denen bei einer erfolgten Voreinspritzung und/oder bei einer nicht erfolgten Voreinspritzung ein messbarer Effekt auftritt.

Figur 2 veranschaulicht qualitativ Dosiermengen und Winkellagen einer Voreinspritzung VE und einer Haupteinspritzung HE in einem Verdichtungstakt zwischen einem unteren Totpunkt UT und einem oberen Totpunkt OT eines Kolbens des Verbrennungsmotors 10. Der Länge der Impulse VE, HE auf der °KW-Achse sind zeitliche Einspritzimpulsbreiten 42 und 44 zugeordnet, so dass sich die jeweiligen Einspritzmengen jeweils als Flächen unter dem mit VE und HE bezeichneten rechteckförmigen Impulsen ergeben, wenn $\dot{Q}$ dem Volumenstrom durch ein Einspritzventil 20, 22, 24, 26 im geöffneten Zustand entspricht.

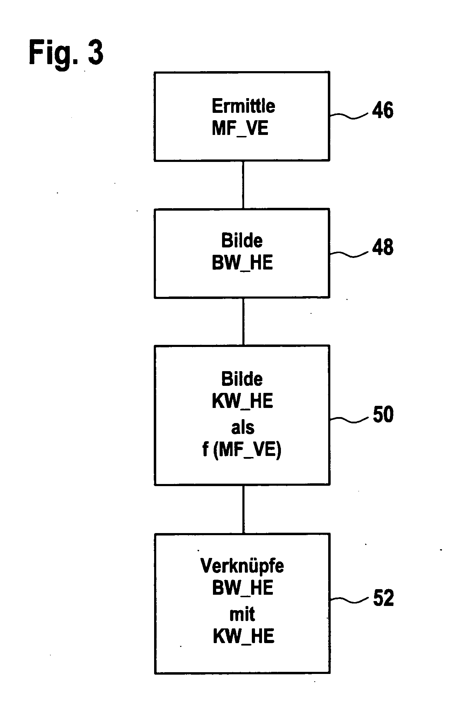

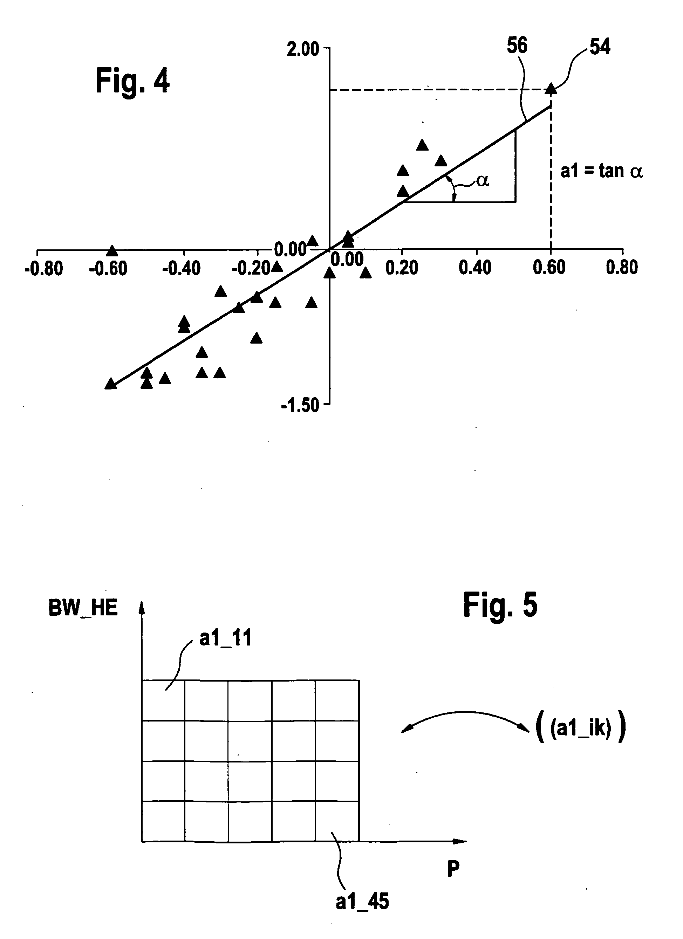

Figur 3 stellt ein Flussdiagramm als Ausführungsbeispiel eines erfindungsgemäßen Verfahrens dar, wie es von dem Steuergerät 30 in dem Umfeld in der Figur 1 abgearbeitet wird. Dabei versteht es sich, dass das Flussdiagramm der Figur 3 nur einen Ausschnitt aus einem übergeordneten Steuerungsprogramm zur Steuerung und/oder Regelung von Funktionen des Verbrennungsmotors 10 darstellt. In dem übergeordneten Motorsteuerungsprogramm werden fortlaufend Kraftstoffmengen für Voreinspritzungen VE bestimmt, die zugehörigen Einspritzimpulsbreiten 42 berechnet und die Einspritzventile 20, 22, 24, 26 mit diesen Einspritzimpulsbreiten 42 angesteuert. Aus dem Signal KS_S des Körperschallsensors 40 ermittelt das Steuergerät 30 im Schritt 46 einen Mengenfehler MF_VE von Voreinspritzungen VE. Dabei kann die Berechnung des Mengenfehlers MF_VE bevorzugt Brennraum-individuell erfolgen. Im Schritt 48 wird ein Basiswert BW_HE für die Haupteinspritzung HE gebildet. Dabei soll die Größe BW_HE alternativ die zugeordnete Kraftstoffmenge oder die dafür erforderliche Einspritzimpulsbreite darstellen. Der Basiswert BW_HE wird zum Beispiel abhängig vom Signal FW des Fahrerwunschgebers 34, eines Drehzahlsignals n des Winkelsensors 38 und ggf. in Abhängigkeit von weiteren Funktionen des Verbrennungsmotors bestimmt, die vom Steuergerät 30 gesteuert werden. Beispiele solcher Funktionen sind Regenerationen von Katalysatoren und/oder Partikelfiltern im Abgas des Verbrennungsmotors 10, allgemein Funktionen zur Erhöhung der Abgastemperatur des Verbrennungsmotors 10, oder Drehmomentanforderungen anderer Funktionen, zum Beispiel eines Klimaanlagenantriebs, einer Getriebesteuerung, etc. An den Schritt 48 schließt sich ein Schritt 50 an, in dem ein Korrekturwert KW_HE für die Haupteinspritzung HE als Funktion f des Mengenfehlers MF_VE der Voreinspritzung VE gebildet wird. Anschließend erfolgt im Schritt 52 eine Verknüpfung des Basiswertes BW_HE der Haupteinspritzung HE mit dem zugeordneten Korrekturwert KW_HE. Aus dem Resultat des Schritts 52 wird die Einspritzimpulsbreite 44 in der Figur 2 gebildet. Figur 4 zeigt eine Verteilung von Wertepaaren aus Mengenfehlern von Haupteinspritzungen HE und Mengenfehlern von Voreinspritzungen VE in einer über Achsen für die Mengenfehler der Voreinspritzung VE und Mengenfehler der Haupteinspritzungen HE aufgespannten Ebene. Dabei sind die Mengenfehler von Voreinspritzungen über der Abszisse für Voreinspritzmengen von 1 mm³ Kraftstoff und die Mengenfehler der Haupteinspritzungen für Einspritzmengen von 15 mm³ Kraftstoff längs der Koordinate für eine Stichprobe von 28 Injektoren des gleichen Typs aufgetragen. Bei dem Wertepaar 54 ergibt sich also ein Mengenfehler von 0,6 mm³ bei einer Voreinspritzmenge von 1 mm³ also insgesamt eine Voreinspritzmenge von 1,6 mm³, während sich für denselben Injektor bei einer Haupteinspritzmenge von 15 mm³ ein Mengenfehler von etwas über 1,5 mm³, also insgesamt eine Haupteinspritzmenge von etwas über 16,5 mm³ ergibt. Entsprechendes gilt für die übrigen in der Figur 4 dargestellten Messpunkte/Wertepaare. Verteilungen, wie sie in der Figur 4 dargestellt sind, werden für einen Injektor-Typ offline in regelmäßigen Zeitintervallen während eines Prüfstands-Motor-Dauerlaufs aufgenommen. Dabei wird jeweils eine Verteilung für einen bestimmten Raildruck (Druck im Kraftstoff-Druckspeicher 28) oder ein bestimmtes Intervall von Raildruckwerten und eine bestimmte Haupteinspritzmenge, bzw. ein bestimmtes Intervall von Haupteinspritzmengen, aufgenommen. Zur Realisierung einer Ausgestaltung der hier vorgestellten Verfahren legt man durch die Punktewolke (Verteilung) eine Ausgleichsgerade 56. Entsprechend dieser Ausgleichsgerade 56 ergibt sich ein Mengenfehler MF_HE einer Haupteinspritzung HE als Summe eines Produktes aus einem Steigungs-Korrelationskoeffizienten a1 und dem Mengenfehler MF_VE einer Voreinspritzung, und einem additiven Offset a0, der den Schnittpunkt der Ausgleichsgeraden 56 mit der Ordinate definiert. In der Figur 4 ist a0 näherungsweise gleich 0. Dies ist aber lediglich für den bei der Messung herrschenden Druck im Kraftstoff-Druckspeicher 28 charakteristisch. Bei anderen Werten dieses Druckes können sich andere Werte für a0 ergeben. Es hat sich gezeigt, dass sich Änderungen des Drukkes P im Kraftstoff-Druckspeicher 28 bevorzugt in einer Änderung des additiven Offsets a0 abbilden, während sich Änderungen der Kraftstoffmenge bei Haupteinspritzungen HE stärker im Verhalten des Steigungs-Korrelationskoeffizienten a1 = tangens α abbilden.

Diese Korrelationsfaktoren al, a0 werden für gemessene Kombinationen von Kraftstoffmengen von Haupteinspritzungen HE und dem dabei herrschenden Druck P im Kraftstoff-Druckspeicher 28 berechnet und im Steuergerät 30 des Verbrennungsmotors 10 in zwei Kennfeldern abgelegt.

Ein solches Kennfeld ist in der Figur 5 als Kennfeld für den Steigungs-Korrelationsfaktor a1 abgebildet. Im Betrieb des Verbrennungsmotors 10 bildet das Steuergerät 30 Basiswerte BW_HE für Haupteinspritzungen HE und misst den Druck im Kraftstoff-Druckspeicher 28 mit Hilfe des Drucksensors 32. Mit den so gebildeten und gemessenen Größen BW_HE und p wird das in der Figur 5 dargestellte Kennfeld 58 adressiert und ein für dieses Wertepaar aus BW_HE und p vorbestimmter Steigungs-Korrelationsfaktor a1 ausgelesen. Das Kennfeld 58 entspricht insofern einer Matrix ((a1_ik)), bei dem die einzelnen Matrixelemente a1_ik die Korrelationsfaktoren darstellen, i die Anzahl der Zeilen und damit die Feinheit der Unterteilung der Basiswerte BW_HE für Kraftstoffmengen von Haupteinspritzungen HE, und k die Zahl der Spalten die Feinheit der Unterteilung für Kraftstoffdrücke p angibt.

Ein entsprechendes Kennfeld ergibt sich für den additiven Offset a0.

Im Fahrzeug wird die Mengendrift also bei kleinen Kraftstoffmengen pro Einspritzung, typischerweise in einem VE-Bereich zwischen einer Brenngrenze bis hinauf zu 4 mm³, gemessen. Für den aktuellen Motorbetriebspunkt werden die Faktoren a1 und a0 aus den genannten Kennfeldern interpoliert. Die Mengendrift für die aktuelle Einspritzmenge berechnet sich dann aus den interpolierten Faktoren und der VE-Mengendrift durch die oben angegebene Geraden-Gleichung. Die Korrektur der Mengendrift erfolgt durch Eingriff auf die Kraftstoffzumessung der weiteren Einspritzung (Haupt- und/oder Nacheinspritzung).

Die Berechnung der Korrelation kann sowohl über der Einspritzmenge als auch über der Ansteuerdauer der Injektoren erfolgen. Auch der Eingriff auf die Kraftstoffzumessung kann sowohl als Mengeneingriff als auch als Ansteuerdauer-Eingriff erfolgen. Bei der Berechnung der Korrelation über die Ansteuerdauer ergibt sich eine einfachere Funktionsstruktur, wenn die Drift bei kleiner Menge bereits als Ansteuerkorrektur im Steuergerät 30 zur Verfügung steht. Wie bereits erwähnt, kann statt einer Geraden-Gleichung zur Abbildung der Korrelation auch eine andere Funktion, z.B. ein Polynom kleinerer oder größerer Ordnung verwendet werden. Zusätzlich kann die Korrektur der Mengendrift an die Betriebszeit der Injektoren angepasst werden. Dazu wird der Korrekturwert mit einem betriebszeitabhängigen Faktor multipliziert. Dieser Faktor kann z.B. in einer Kennlinie über der Verbrennungsmotor-Betriebszeit im Steuergerät 30 abgelegt sein.

Eine besonders einfache und vorteilhafte Ausgestaltung ergibt sich, wenn als Funktion zur Abbildung der Korrelation eine Kennlinie vorgesehen ist, die eine Größe PW für die Wirksamkeit der Korrektur der Voreinspritzung auf andere Einspritzungen, wie beispielsweise die Haupteinspritzung, angibt. Dabei ist in der Kennlinie ein Prozentwert oder ein Faktor zwischen Null und Eins abgelegt. Der Korrekturwert KW_HE für die Haupteinspritzung ergibt sich ausgehend von dem Mengenfehler MF_VE für die Voreinspritzung unter Verwendung der folgenden Formel:

$$KW\_HE = MF\_VE * PW (BW\_HE)$$

Wobei es sich bei dem Wert PW um eine Größe handelt, die die Wirksamkeit der Korrelation anzeigt, der in diesem Fall abhängig vom Basiswert der Haupteinspritzung Werte zwischen 0 und 1 annimmt. Für kleine Werte der einzuspritzenden Kraftstoffmenge nimmt die Größe PW den Wert 1 und für große Werte für die einzuspritzenden Kraftstoffmenge nimmt die Größe PW den Wert 0 an. Im einfachsten Fall nimmt die Größe PW linear von 1 auf 0 ab. Es sind beliebige Abhängigkeiten realisierbar, wobei allen gemeinsam ist, dass bei kleinen Kraftstoffmengen die Größe PW einen Wert nahe 1 und bei großen Kraftstoffmengen den Wert 0 annimmt.

Dies bedeutet es wird eine feste Korrelation zwischen den Korrekturwerten für die Voreinspritzung und den weiteren Teileinspritzungen, insbesondere der Haupteinspritzung, angenommen. Dabei werden die Korrekturwerte bei kleinen Mengen von der Voreinspritzung übernommen. Bei größeren Mengen werden die Korrekturwerte teilweise übernommen. Bei großen Mengen erfolgt keine Korrektur.

Die Korrekturwerte werden in Betriebszuständen ermittelt bei denen eine Voreinspritzung erfolgt. Diese Korrekturwerte werden auch zur Korrektur der Haupteinspritzung verwendet. Diese Korrektur der Haupteinspritzung erfolgt vorzugsweise in allen Betriebszuständen, insbesondere auch in Betriebszuständen ohne Voreinspritzung.

Dies bedeutet der Faktor a1_ik nimmt Werte, der der Größe PW für die Wirksamkeit der Korrelation entspricht, zwischen 0 und 1 an. Dabei ist der Faktor a1_ik bzw. die Größe PW abhängig von der eingespritzten Kraftstoffmenge der zu korrigierenden Teileinspritzung, insbesondere der Haupteinspritzung, in einem Kennfeld und/oder einer Tabelle abgelegt.

**Patentansprüche**

1. Verfahren zur Dosierung von Kraftstoff in einen Brennraum (12,14, 16,18) eines Verbrennungsmotors (10), bei dem eine für eine Verbrennung zu dosierende Kraftstoffmenge durch eine Voreinspritzung (VE) und wenigstens eine weitere Teileinspritzung (H E) dosiert wird und bei dem im Betrieb des Verbrennungsmotors (10) Mengenfehler (MF_VE) der Voreinspritzung (VE) aus dem Signal (KS_S) wenigstens eines Sensors (40) ermittelt werden, ein Korrekturwert (KW_HE) als Funktion des Mengenfehlers (MF_VE) der Voreinspritzung (VE) gebildet wird, und wenigstens eine der weiteren Teileinspritzungen (HE) mit dem Korrekturwert (KW_HE) korrigiert wird, dadurch gekennzichnet, dass wobei für wenigstens eine Teileinspritzung (VE, HE) ein Basiswert (BW_HE) einer einzuspritzenden Kraftstoffmenge oder ein Basiswert einer entsprechenden Einspritzimpulsbreite gebildet wird, und dass die Funktion eine Abhängigkeit von einem Produkt des Mengenfehlers (MF_VE) der Voreinspritzung (VE) und eines Faktors (a1_ik) aufweist, und der Basiswerte (BW_HE) mit dem Korrekturwert (KW_HE) verknüpft wird und dass der Faktor (a1_ik) Werte zwischen 0 und 1 annimmt.

2. Verfahren nach Anspruch 1, **dadurch gekennzeichnet, dass** die Verknüpfung additiv ist.

3. Verfahren nach Anspruch 1 oder 2, **dadurch gekennzeichnet, dass** der Korrekturwert (KW_HE) zusätzlich abhängig von einem Druck (p) in einem Kraftstoff-Druckspeicher (28) des Verbrennungsmotors (10) gebildet wird.

4. Verfahren nach Anspruch 3, **dadurch gekennzeichnet, dass** die Funktion ein Polynom ersten Grades mit einer von dem Faktor (a1_ik) abhängigen Steigung und einem von dem Druck (p) abhängigen additiven Versatz ist.

5. Verfahren nach Anspruch 3, **dadurch gekennzeichnet, dass** die Funktion ein Polynom höheren als des ersten Grades ist.

6. Verfahren nach wenigstens einem der vorhergehenden Ansprüche, **dadurch gekennzeichnet, dass** die Funktion durch ein Korrelationsmodell definiert wird, das den im Betrieb ermittelten Mengenfehlern (MF_VE) der Voreinspritzungen (VE) individuell berechnete Mengenfehler der weiteren Einspritzimpulsbreiten zuordnet.

7. Verfahren nach Anspruch 6 in Verbindung mit Anspruch 4 oder Anspruch 6, **dadurch gekennzeichnet, dass** die Koeffizienten des Polynoms off line durch statistische Bewertung von bei einer Stichprobe von Injektoren eines Typs ermittelten Korrelationen zwischen Mengenfehlern bei Voreinspritzimpulsbreiten und Mengenfehlern bei weiteren Einspritzimpulsbreiten ermittelt werden.

8. Verfahren nach wenigstens einem der vorhergehenden Ansprüche, **dadurch gekennzeichnet, dass** der Korrekturwert zusätzlich in Abhängigkeit von einer Betriebszeit von Injektoren des Verbrennungsmotors gebildet wird.

9. Verfahren nach Anspruch 1, **dadurch gekennzeichnet, dass** als Sensor ein Körperschallsensor verwendet wird.

10. Steuergerät (30) eines wenigstens einen Injektor (20, 22, 24, 26) aufweisenden Einspritzsystems eines Verbrennungsmotors (10), das eine Kraftstoffmenge für einen Verbrennungsvorgang durch eine Voreinspritzung (VE) und wenigstens eine weitere Teileinspritzung (HE) in einen Brennraum (12, 14, 16, 18) des Verbrennungsmotors (10) dosiert, wobei das Steuergerät (30) im Betrieb des Verbrennungsmotors (10) Mengenfehler (MF_VE) der Voreinspritzung (VE) aus dem Signal (KS_S) wenigstens eines Sensors (40) ermittelt, das Steuergerät (30) einen Korrekturwert (KW_HE) als Funktion des Mengenfehlers (MF_VE) der Voreinspritzung (VE) bildet, und wenigstens eine der weiteren Teileinspritzungen (HE) mit dem Korrekturwert (KW_HE) korrigiert, **dadurch gekennzeichnet, dass** wobei für wenigstens eine Teileinspritzung (VE, HE) ein Basiswert (BW_HE) einer einzuspritzenden Kraftstoffmenge oder ein Basiswert einer entsprechenden Einspritzimpulsbreite gebildet wird, und dass die Funktion eine Abhängigkeit von einem Produkt des Mengenfehlers (MF_VE) der Voreinspritzung (VE) und eines Faktors (a1_ik) aufweist, und der Basiswerte (BW_HE) mit dem Korrekturwert (KW_HE) verknüpft wird und dass der Faktor (a1_ik) Werte zwischen 0 und 1 annimmt.

11. Steuergerät (30) nach Anspruch 10, **dadurch gekennzeichnet, dass** es wenigstens eines der Verfahren nach den Ansprüchen 1 bis 9 steuert.

**Claims**

1. Method for dosing fuel into a combustion chamber (12, 14, 16, 18) of an internal combustion engine (10), in which method a fuel quantity to be dosed for a combustion is dosed by means of a pilot injection (VE) and at least one further partial injection (HE), and in which method, during operation of the internal combustion engine (10), quantity errors (MF_VE) of the pilot injection (VE) are determined from the signal (KS_S) of at least one sensor (40), a corrective value (KW_HE) is formed as a function of the quantity error (MF_VE) of the pilot injection (VE), and at least one of the further partial injections (HE) is corrected with the corrective value (KW_HE), **characterized in that**, for at least one partial injection (VE, HE), a base value (BW_HE) of a fuel quantity to be injected or a base value of a corresponding injection pulse width is formed, and **in that** the function has a dependency on a product of the quantity error (MF_VE) of the pilot injection (VE) and a factor (a1_ik), and the base value (BW_HE) is combined with the corrective value (KW_HE), and **in that** the factor (a1_ik) assumes values between 0 and 1.

2. Method according to Claim 1, **characterized in that** the combination is additive.

3. Method according to Claim 1 or 2, **characterized in that** the corrective value (KW_HE) is formed additionally as a function of a pressure (p) in a fuel pressure accumulator (28) of the internal combustion engine (10).

**4.** Method according to Claim 3, **characterized in that** the function is a first-order polynomial with a gradient which is dependent on the factor (a1_ik) and with an additive offset which is dependent on the pressure (p).

**5.** Method according to Claim 3, **characterized in that** the function is a polynomial higher than first-order.

**6.** Method according to at least one of the preceding claims, **characterized in that** the function is defined by a correlation model by means of which the quantity errors (MF_VE) of the pilot injections (VE) determined during operation are assigned individually calculated quantity errors of the other injection pulse widths.

**7.** Method according to Claim 6 in conjunction with Claim 4 or Claim 6, **characterized in that** the coefficients of the polynomial are determined offline by statistical evaluation of correlations, determined in a random sample of injectors of one type, between quantity errors at pilot injection pulse widths and quantity errors at other injection pulse widths.

**8.** Method according to at least one of the preceding claims, **characterized in that** the corrective value is formed additionally as a function of an operating duration of injectors of the internal combustion engine.

**9.** Method according to Claim 1, **characterized in that** a body-borne noise sensor is used as a sensor.

**10.** Control unit (30) of an injection system, which has at least one injector (20, 22, 24, 26), of an internal combustion engine (10), which injection system doses a fuel quantity for a combustion into a combustion chamber (12, 14, 16, 18) of the internal combustion engine (10) by means of a pilot injection (VE) and at least one further partial injection (HE), wherein the control unit (30), during operation of the internal combustion engine (10), determines quantity errors (MF_VE) of the pilot injection (VE) from the signal (KS_S) of at least one sensor (40), the control unit (30) forms a corrective value (KW_HE) as a function of the quantity error (MF_VE) of the pilot injection (VE), and corrects at least one of the further partial injections (HE) with the corrective value (KW_HE), **characterized in that**, for at least one partial injection (VE, HE), a base value (BW_HE) of a fuel quantity to be injected or a base value of a corresponding injection pulse width is formed, and **in that** the function has a dependency on a product of the quantity error (MF_VE) of the pilot injection (VE) and of a factor (a1_ik), and the base value (BW_HE) is combined with the corrective value (KW_HE), and **in that** the factor (a1_ik) assumes values between 0 and 1.

**11.** Control unit (30) according to Claim 10, **characterized in that** it controls one of the methods according to Claims 1 to 9.

## Revendications

**1.** Procédé pour doser du carburant dans une chambre de combustion (12, 14, 16, 18) d'un moteur à combustion interne (10), dans lequel une quantité de carburant à doser pour une combustion est dosée par une pré-injection (VE) et au moins une injection partielle supplémentaire (HE) et dans lequel, pendant le fonctionnement du moteur à combustion interne (10), des erreurs quantitatives (MF_VE) de la pré-injection (VE) sont déterminées à partir du signal (KS_S) d'au moins un capteur (40), une valeur de correction (KN_HE) est établie en fonction de l'erreur quantitative (MF_VE) de la pré-injection (VE) et au moins l'une des injections partielles supplémentaires (HE) est corrigée avec la valeur de correction (KW_HE), **caractérisé en ce que** pour au moins une injection partielle (VE, HE), une valeur de base (BW_HE) d'une quantité de carburant à injecter ou une valeur de base d'une largeur d'impulsion d'injection correspondante est établie, et **en ce que** la fonction est dépendante d'un produit de l'erreur quantitative (MF_VE) de la pré-injection (VE) et d'un facteur (a1_ik), et la valeur de base (BW_HE) est liée à la valeur de correction (KW_HE) et **en ce que** le facteur (a1_ik) prend des valeurs comprises entre 0 et 1.

**2.** Procédé selon la revendication 1, **caractérisé en ce que** la liaison est additive.

**3.** Procédé selon la revendication 1 ou 2, **caractérisé en ce que** la valeur de correction (KW_HE) est en outre établie en fonction d'une pression (p) dans un accumulateur de pression de carburant (28) du moteur à combustion interne (10).

**4.** Procédé selon la revendication 3, **caractérisé en ce que** la fonction est un polynôme de premier degré avec une pente dépendant du facteur (a1_ik) et un décalage additif dépendant de la pression (P).

**5.** Procédé selon la revendication 3, **caractérisé en ce que** la fonction est un polynôme de degré supérieur à un.

**6.** Procédé selon au moins l'une quelconque des revendications précédentes, **caractérisé en ce que** la fonction est définie par un modèle de corrélation, qui associe aux erreurs quantitatives (MF_VE) des pré-injections (VE) déterminées pendant le fonctionnement à des erreurs quantitatives calculées individuellement des largeurs d'impulsions d'injection supplémentaires.

7. Procédé selon la revendication 6 en association avec la revendication 4 ou la revendication 6, **caractérisé en ce que** les coefficients du polynôme sont déterminés hors ligne par analyse statistique de corrélations déterminées dans le cas d'un échantillon d'injecteurs d'un type, entre des erreurs quantitatives en cas de largeurs d'impulsion de pré-injection et des erreurs quantitatives dans le cas de largeurs d'impulsions d'injection supplémentaires.

8. Procédé selon au moins l'une quelconque des revendications précédentes, **caractérisé en ce que** la valeur de correction est établie en outre en fonction d'un temps de fonctionnement d'injecteurs du moteur à combustion interne.

9. Procédé selon la revendication 1, **caractérisé en ce que** l'on utilise comme capteur un capteur de bruit de structure.

10. Appareil de commande (30) d'un système d'injection présentant au moins un injecteur (20, 22, 24, 26) d'un moteur à combustion interne (10), qui dose une quantité de carburant pour une opération de combustion par une pré-injection (VE) et au moins une injection partielle supplémentaire (HE) dans une chambre de combustion (12, 14, 16, 18) du moteur à combustion interne (10), l'appareil de commande (30), pendant le fonctionnement du moteur à combustion interne (10), déterminant des erreurs quantitatives (MF_VE) de la pré-injection (VE) à partir du signal (KS_S) d'au moins un capteur (40), l'appareil de commande (30) établissant une valeur de correction (KW_HE) en fonction de l'erreur quantitative (MF_VE) de la pré-injection (VE) et au moins l'une des injections partielles supplémentaires (HE) étant corrigée avec la valeur de correction (KW_HE), **caractérisé en ce que** pour au moins une injection partielle (VE, HE), une valeur de base (BW_HE) d'une quantité de carburant à injecter ou une valeur de base d'une largeur d'impulsion d'injection correspondante est établie, et **en ce que** la fonction est dépendante d'un produit de l'erreur quantitative (MF_VE) de la pré-injection (VE) et d'un facteur (a1_ik), et la valeur de base (BW_HE) est liée à la valeur de correction (KW_HE) et **en ce que** le facteur (a1_ik) prend des valeurs comprises entre 0 et 1.

11. Appareil de commande (30) selon la revendication 10, **caractérisé en ce qu'**il commande au moins l'un des procédés selon les revendications 1 à 9.

**Fig. 1**

**Fig. 2**

**Fig. 3**

| | |
|---|---|
| **Ermittle MF_VE** | 46 |
| **Bilde BW_HE** | 48 |
| **Bilde KW_HE als f (MF_VE)** | 50 |
| **Verknüpfe BW_HE mit KW_HE** | 52 |

**Fig. 4**

2.00

56    54

$a1 = \tan \alpha$

$\alpha$

-0.80   -0.60   -0.40   -0.20   0.00   0.20   0.40   0.60   0.80

0.00

-1.50

**Fig. 5**

BW_HE

a1_11

$\left(\left(a1\_ik\right)\right)$

P

a1_45

12

**EP 1 907 683 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0921296 A1

- DE 10305656 A1